# EUROPEAN PATENT SPECIFICATION

(11) **EP 4 535 299 B1**
(45) Date of publication and mention of the grant of the patent: **22.07.2026**
(21) Application number: 24202507.0
(22) Date of filing: 25.09.2024
(51) Int. Cl.: G06V 20/17

(54) **GENERATING AN EMERGENCY EVENT SPATIAL ANALYSIS**
ERZEUGUNG EINER RÄUMLICHEN ANALYSE EINES NOTFALLEREIGNISSES
GÉNÉRATION D'UNE ANALYSE SPATIALE D'ÉVÉNEMENT D'URGENCE

(30) Priority: 06.10.2023 US 202318377511
(43) Date of publication of application: 09.04.2025
(73) Proprietor: Honeywell International Inc., Charlotte, NC 28202 (US)
(72) Inventor: RAJ, Nishant, Charlotte, 28202 (US); SWAMINATHAN, Sriramakrishnan, Charlotte, 28202 (US); CHAUHAN, Prabha, Charlotte, 28202 (US)
(74) Representative: Haseltine Lake Kempner LLP

(56) References cited:
- US-B1- 11 288 936
- US-B1- 11 417 106
- US-B2- 11 710 415

## Description

### Technical Field

The present disclosure relates to devices, systems, and methods for generating an emergency event spatial analysis.

### Background

A first responder may be a person who is designated and/or trained to respond to an emergency event. Such an emergency event may include, for instance, an accident, a disaster, medical emergency, fire, crime, among other emergency events. The first responder may have received specialized training and may be among the first to arrive at an emergency event in order to provide assistance and/or incident resolution. First responders may include firefighters, paramedics, emergency medical technicians (EMTs), law enforcement officers, etc.

US11710415B2 discloses a UAV-based monitoring platform used for collecting visual and sensor data in various environments. US11417106 B1 relates to drone-based monitoring systems used for inspection or surveillance purposes, including the use of imaging sensors and remote data transmission. US11288936B1 discloses drone systems capable of environmental monitoring and data acquisition using onboard sensors.

### Summary

The present invention is defined by the independent claims, to which reference should now be made. Advantageous embodiments are set out in the dependent claims.

### Brief Description of the Drawings

Figure 1 is an example of a system for generating an emergency event spatial analysis, in accordance with one or more embodiments of the present disclosure.
Figure 2 is an example of a user interface of a mobile device showing a point of interest for generating an emergency event spatial analysis, in accordance with one or more embodiments of the present disclosure.
Figure 3 is an example of a user interface of a mobile device showing an object in an emergency event spatial analysis, in accordance with one or more embodiments of the present disclosure.
Figure 4 is an example of a controller for generating an emergency event spatial analysis, in accordance with one or more embodiments of the present disclosure.

### Detailed Description

Devices, systems, and methods for generating an emergency event spatial analysis are described herein. In some examples, one or more embodiments include a controller comprising a memory and a processor to execute instructions stored in the memory to receive a visual input from a first sensor and a spatial input from a second sensor, where the first sensor and the second sensor are located on an unmanned aerial vehicle (UAV), generate, based on the visual input and the spatial input, an emergency event spatial analysis, and display, via a user interface, the emergency event spatial analysis.

During an emergency event, first responders may respond to the location of the emergency event. Ascertaining information about the emergency event may be challenging. Information about the type of event, the scope of the event, whether there may be trapped or injured persons, etc. may be difficult to obtain, as emergency events may be quite chaotic.

As a result, first responders may perform their duties without the aid of such information. For example, firefighters may enter a building without knowing exact locations of where a fire is occurring, how intense the fire is, if there are any occupants of the building that are trapped, the best path to the location of the fire and/or to any trapped occupants, the best evacuation routes, etc. As another example, first responders to the scene of an earthquake may not know whether parts of rubble caused by the earthquake are stable or unstable, whether there are any trapped people, locations of any trapped people, etc. Rather, such decisions on how and where to go are typically made on an on-the-go basis. However, such an approach can put a first responders lives in danger.

Generating an emergency event spatial analysis, according to the present disclosure, can utilize an unmanned aerial vehicle (UAV) having various sensors to gather information for first responders about an emergency event. Information from the sensors can be utilized to generate the emergency event spatial analysis to allow for first responders to make informed decisions on how and where to go during an emergency event. Such an approach can reduce risks to first responders who are responding to an emergency event, as compared with previous approaches.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

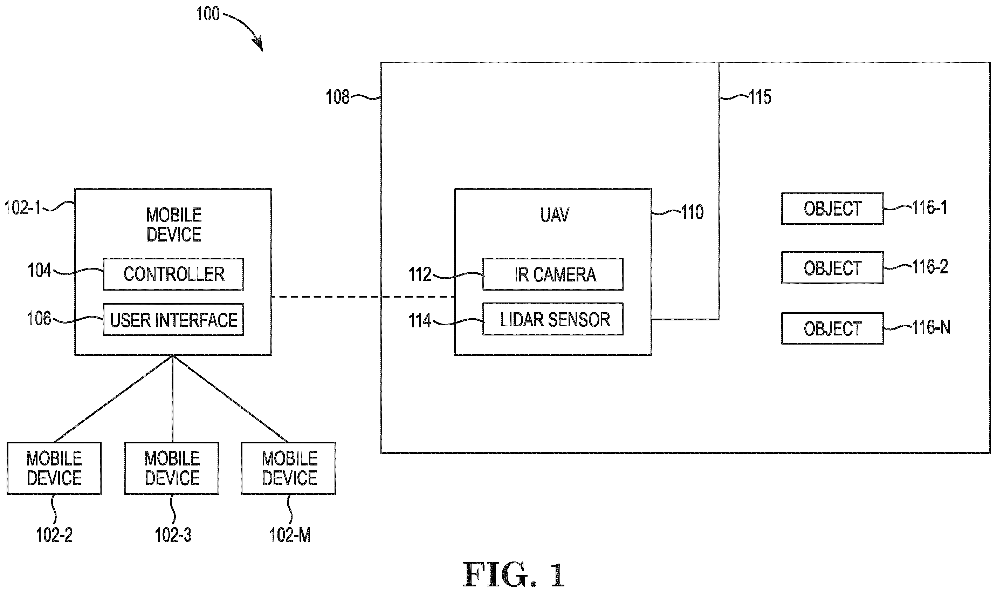

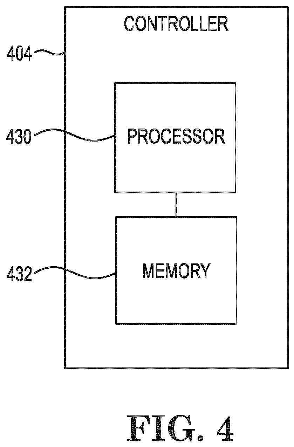

The figures herein follow a numbering convention in which the first digit or digits correspond to the drawing figure number and the remaining digits identify an element or component in the drawing. Similar elements or components between different figures may be identified by the use of similar digits. For example, 104 may reference element "04" in Figure 1, and a similar element may be referenced as 404 in Figure 4.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 is an example of a system 100 for generating an emergency event spatial analysis, in accordance with one or more embodiments of the present disclosure. The system 100 can include mobile devices 102-1, 102-2, 102-3, 102-M, and a space 108 in which a UAV 110 and objects 116-1, 116-2, 116-N can be located.

As mentioned above, a first responder may respond to a scene of an event. Such an event may take place in the space 108. The space 108 may be a location at which an emergency event is occurring. The space 108 may be a building, a portion of a building, an outdoor location, etc.

For example, the first responder may be a firefighter responding to a report of a fire occurring in the space 108. When the first responder arrives, the first responder may not know the location of the fire inside the space 108, how intense the fire is, whether there are any occupants of the space 108 that are trapped, etc.

Accordingly, the first responder can utilize the UAV 110. As used herein, the term "UAV" refers to an aircraft without a human pilot onboard. For example, the UAV can be an aircraft that can be operated autonomously and/or by remote control. UAV 110 can be, for example, a single rotary UAS or multi-rotor UAS such as a tricopter, quadcopter, hexacopter, octocopter, etc. In some embodiments, UAV 110 may include multi-rotor positioning including Quad I, Quad X, Hex I, Hex V, Hex Y, Hex IY, Oct X, Oct I, Oct V, among other examples of rotor positioning.

The UAV 110 can be controlled by the mobile device 102-1. As used herein, a mobile device can include devices that are (or can be) carried and/or worn by a user. For example, a mobile device can be a phone (e.g., a smart phone), a tablet, a personal digital assistant (PDA), smart glasses, and/or a wrist-worn device (e.g., a smart watch), among other types of mobile devices. For example, the mobile device 102-1 can be a phone which can control the UAV 110 via a wireless connection to the UAV 110.

Utilizing the mobile device 102-1, a first responder can control the UAV 110 so as to pilot the UAV 110 into the space 108. Utilizing information transmitted from the UAV 110, the first responder can determine a location of an emergency event inside the space 108, an intensity level of the emergency event, objects of interest inside the space 108, ranging information about the space 108, proposed evacuation routes 115, among other information that can help the first responder address the emergency event in a safer way as compared with previous approaches, as is further described herein.

As illustrated in Figure 1, the UAV 110 can include a first sensor and a second sensor. The first sensor can be an infrared (IR) camera 112. The IR camera 112 can be a thermographic device that captures images in the IR wavelength. The second sensor can be a light detection and ranging (LIDAR) sensor 114. The LIDAR sensor is a device that captures ranging information by transmitting light to reflect off of objects and measuring the time for the reflected light to return to the device. The IR camera 112 and the LIDAR sensor 114 are located on the UAV 110, as is further described herein.

As mentioned above, the IR camera 112 can capture visual information in the space 108 and generate a visual input. The visual input can include, for instance, thermographic data about the space 108. For example, the visual input can be thermographic data about the objects 116-1, 116-2, 116-N located in the space 108.

Additionally, the LIDAR sensor 114 can capture spatial information in the space 108 and generate a spatial input. The spatial input can include, for instance, time-of-flight distance and/or dimensional data about the space 108 captured by the LIDAR sensor 114.

The visual input from the IR camera 112 and the spatial input from the LIDAR sensor 114 can be transmitted to the controller 104. For example, although not illustrated in Figure 1 for clarity and so as not to obscure embodiments of the present disclosure, the UAV 110 can include a transceiver that can wirelessly transmit and/or receive information. The visual input and the spatial input can be wirelessly transmitted from the UAV 110 (e.g., via the transceiver) to the controller 104 of the mobile device 102-1.

Accordingly, the controller 104 can generate an emergency event spatial analysis based on the visual input and the spatial input. As used herein, the emergency event spatial analysis can be a collection of evaluated and focused information pertaining to an emergency event. Such a collection of evaluated and focused information can be utilized by the first responder to efficiently identify objects 116-1, 116-2, 116-N, and safely navigate the space 108 while responding to the emergency event, as is further described herein.

In some examples, objects 116-1, 116-2, 116-N may be objects that are radiating thermal energy in the space 108. For example, object 116-1 may be a person, and object 116-2 may be a dog. Objects 116-1 and 116-2 may be trapped occupants in the space 108 as a result of the emergency event that is occurring. Accordingly, the controller 104 can generate the emergency event spatial analysis by generating an image of the objects 116-1 and 116-2. For example, the controller 104 can utilize the thermographic data included in the visual input to generate images of the objects 116-1, 116-2 that are radiating thermal energy in the space 108.

The controller 104 can cause the emergency event spatial analysis to be displayed via the user interface 106. For example, the controller can cause the images of the objects 116-1, 116-2 to be displayed on the user interface 106 of the mobile device 102-1. Utilizing the radiating thermal energy of the objects 116-1, 116-2 to generate images of the objects 116-1, 116-2 can allow for a first responder to view the objects 116-1, 116-2 through the user interface 106 via their thermal signatures. Such an approach can allow the first responder to determine the objects 116-1, 116-2 are in the space 108 when normal visibility may be obstructed, such as by smoke if the emergency event is a fire.

In some examples, the first responder may be utilizing the mobile device 102-1 to pilot the UAV 110 while also simultaneously transiting the space 108. Accordingly, the first responder may be able to identify the trapped person and dog by viewing the user interface 106. However, embodiments of the present disclosure are not so limited. For example, a user who may be located remotely from the space 108 can pilot the UAV 110 via a different mobile device (e.g., mobile device 102-2), while the first responder carrying mobile device 102-1 who is entering the space 108 can view the emergency event spatial analysis via user interface 106. In other words, in some examples the first responder having mobile device 102-1 can pilot the UAV 110 and view the emergency event spatial analysis simultaneously, whereas in some examples, the first responder having mobile device 102-1 can view the emergency event spatial analysis while a different user pilots the UAV 110.

In some examples, generating the emergency event spatial analysis can include determining a temperature of the object 116-1, 116-2, 116-N. The controller 104 can utilize the thermographic data included in the visual input to determine a temperature of the objects 116-1, 116-2, 116-N that are radiating thermal energy in the space 108. The controller 104 can then cause the temperature of the objects 116-1, 116-2, 116-N to be displayed on the user interface 106 of the mobile device 102-1. Such an approach can allow for the first responder to determine how closely they may approach the objects 116-1, 116-2, 116-N. For example, if object 116-N is a fire, the first responder may determine the temperature of the fire and how close they may approach the fire.

In some examples, the controller 104 can generate the emergency event spatial analysis by determining ranging information of the space 108 in which the UAV 110 is located. For example, the controller 104 can utilize the time-of-flight distance and/or dimensional data included in the spatial input to determine the ranging information of the space 108. The ranging information can include dimensions of the space 108 and/or distances from the LIDAR sensor 114 of the UAV 110 to the objects 116-1, 116-2, 116-N in the space, as is further described herein.

As mentioned above, in some examples, the ranging information can include dimensions of the space 108 in which the UAV 110 is located. For example, the space 108 may be a lobby of an office building. Utilizing the ranging information from the LIDAR sensor 114, the controller 104 can determine the dimensions of the lobby (e.g., 12 meters by 15 meters).

The controller 104 can display the emergency event spatial analysis by causing the dimensions of the space to be displayed on the user interface 106. Utilizing the dimensions of the space 108, a first responder can determine how large a space is. Such information may be useful in determining how to best fight a fire, enter/exit the space 108, and/or determine any other useful information for responding to any other emergency event.

Although the dimensions of the space 108 are described above as being the dimensions of the floor space, embodiments of the present disclosure are not so limited. For example, dimensions of the space 108 may include dimensions of any entrance and/or egress of the space 108 (e.g., doors, windows, etc.), dimensions of objects 116-1, 116-2, 116-N in the space 108, etc.

In some examples, the ranging information can include distances from the LIDAR sensor 114 to objects 116-1, 116-2, 116-N in the space 108 in which the UAV 110 is located. For example, the space 108 may be a lobby of an office building and object 116-1 may be a human, object 116-2 may be a chair, and object 116-N may be a desk. Utilizing the ranging information from the LIDAR sensor 114, the controller 104 can determine the distance from the LIDAR sensor 114 (e.g., and a distance from the UAV 110) to the objects 116-1, 116-2, 116-N. For example, the controller 104 can determine the distance from the LIDAR sensor 114 to the object 116-1 is 5 meters, the distance from the LIDAR sensor 114 to the object 116-2 is 3 meters, and the distance from the LIDAR sensor 114 to the object 116-N is 4 meters. As described above, the distance from the LIDAR sensor 114 can be determined to an object that is radiating energy in the space 108 in which the UAV is located (e.g., the distance between the LIDAR sensor 114 and object 116-1, which can be a human in some examples).

The controller 104 can display the emergency event spatial analysis by causing the distance between the LIDAR sensor 114 and the objects 116-1, 116-2, 116-N to be displayed on the user interface 106. Utilizing the distances between the LIDAR sensor 114 and the objects 116-1, 116-2, 116-N, the user can determine how far away they are from the objects 116-1, 116-2, 116-N (e.g., by knowing their position relative to the position of the UAV 110). Additionally, in conjunction with knowing the dimensions of the space 108, the user can determine the locations of the objects 116-1, 116-2, 116-N in the space 108 with greater accuracy than previous approaches. Such an approach can allow for the user to determine additional information to allow for safer planning for emergency event response, as compared with previous approaches.

Although the controller 104 is described above as determining the distance between the LIDAR sensor 114 and the objects 116-1, 116-2, 116-N, embodiments of the present disclosure are not so limited. For example, the controller can determine the distance between the LIDAR sensor 114 and other points of interest in the space 108 in which the UAV 110 is located. Points of interest may include entrance/egress locations, emergency event devices (e.g., fire alarms, pull stations, door locks, etc.), etc. The controller 104 can cause such distances between the LIDAR sensor 114 and other points of interest in the space 108 to be displayed via the user interface 106.

Generating the emergency event spatial analysis can further include generating a three-dimensional (3D) image of the space 108 based on the spatial input from the LIDAR sensor 114. For example, utilizing the ranging information (e.g., from the time-of-flight distance and/or dimensional data), the controller 104 can generate a 3D image of the space 108. The 3D image of the space 108 can include 3D models of the space 108, as well as 3D models of the objects 116-1, 116-2, 116-N in the space, any other points of interest in the space, entrance/egress points, etc.

The controller 104 can display the emergency event spatial analysis by causing the 3D image of the space 108 to be displayed on the user interface 106. The 3D image of the space 108 can include any and/or all of the information also described above. For example, the 3D image of the space 108 may include further information overlaid thereon, including any images of objects 116-1, 116-2, 116-N that may be radiating thermal energy in the space 108, temperatures of such objects 116-1, 116-2, 116-N, dimensions of the space 108 and/or distances from the LIDAR sensor 114 to the objects 116-1, 116-2, 116-N and/or any other points of interest in the space 108. Utilizing the 3D image of the space can allow a first responder to gain a full picture of what may be occurring in a space 108 during an emergency event, even if such a space 108 may be inaccessible, obstructed from view (e.g., due to smoke or other particulate), etc.

Utilizing the 3D image of the space 108, the controller 104 can generate an evacuation route from the space 108. For example, utilizing the visual input from the IR camera 112 and the spatial input from the LIDAR sensor 114, the controller 104 can determine entrance/egress locations in the space 108 and generate an evacuation route through an entrance/egress location based on location of objects 116-1, 116-2, 116-N, while avoiding "hot spots" (e.g., locations in the space 108 that have a temperature that exceeds a threshold temperature). Such an evacuation route can be displayed on the user interface 106, and can provide a first responder with a route to leave the space 108, direct any trapped occupants out of the space 108, etc.

Accordingly, as described above, the controller 104 can cause the emergency event spatial analysis to be displayed via the user interface 106. Such an emergency event spatial analysis may include objects 116-1, 116-2, 116-N that may be radiating thermal energy, temperatures of such objects 116-1, 116-2, 116-N, ranging information about the space 108, and/or a 3D image of the space 108.

Further, the controller 104 can cause the emergency event spatial analysis to be displayed on user interfaces of other mobile devices 102-2, 102-3, 102-M. For example, multiple first responders may respond to an emergency event. Causing the emergency event spatial analysis to be mirrored to other user interfaces of other mobile devices 102-2, 102-3, 102-M can allow users of such mobile devices 102-2, 102-3, 102-M to also be aware of the situation in the space 108.

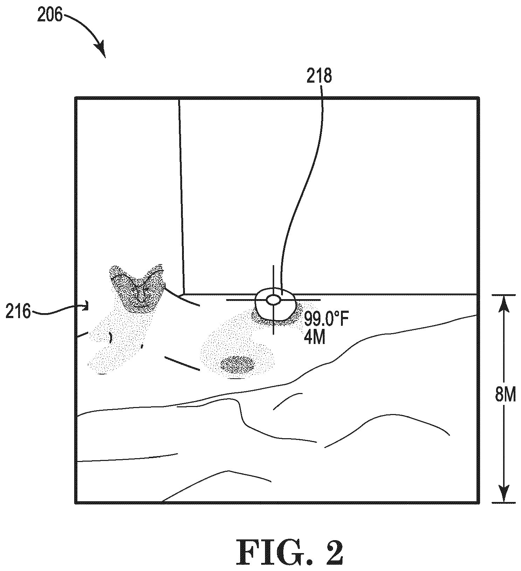

Figure 2 is an example of a user interface 206 of a mobile device showing a point of interest 218 for generating an emergency event spatial analysis, in accordance with one or more embodiments of the present disclosure. A controller can generate the emergency event spatial analysis for display on the user interface 206.

As previously described above, a controller can utilize a spatial input from a LIDAR sensor to generate ranging information about a space. Within the space, there may be objects and/or other points of interest. Further, the controller may utilize a visual input from an IR camera to generate an image of the objects and/or other points of interest in the space. Ranging information can include dimensions of the space and/or distances to objects and/or other points of interest in the space in which the UAV is located.

For example, as illustrated in Figure 2, an object 216 can be a cat that is radiating thermal energy in a space. The cat may be trapped in the space during an emergency event, and obstructed from normal view due to smoke. As illustrated in Figure 2, the controller can cause the dimensions of the space to be displayed (e.g., 8 meters to the rear wall) and a distance to a point of interest in the space (e.g., an object 216, the cat, which is 4 meters from the location of the LIDAR sensor on the UAV). Additionally, as mentioned above, the cat may be radiating energy in the space in which the UAV is located, and as such, the distance may be displayed to the object that is radiating energy (e.g., 4 meters).

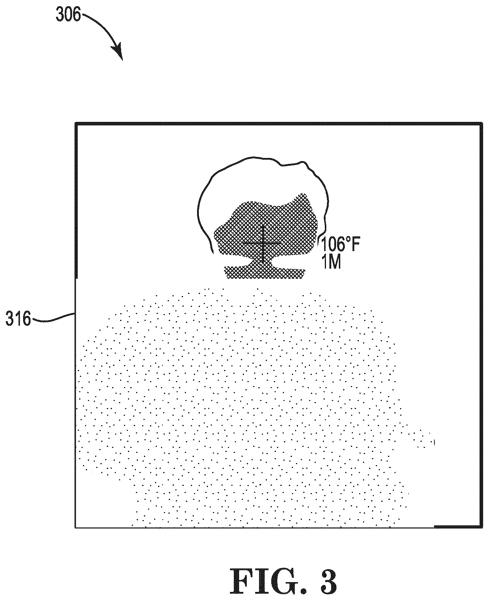

Figure 3 is an example of a user interface 306 of a mobile device showing an object 316 in an emergency event spatial analysis, in accordance with one or more embodiments of the present disclosure. A controller can generate the emergency event spatial analysis for display on the user interface 306.

As previously described above, a controller can utilize a spatial input from a LIDAR sensor to generate ranging information about a space. Within the space, there may be objects and/or other points of interest. Further, the controller may utilize a visual input from an IR camera to generate an image of the objects and/or other points of interest in the space. Ranging information can include dimensions of the space and/or distances to objects and/or other points of interest in the space in which the UAV is located.

As shown in Figure 3, the controller can cause the object 316 to be displayed as part of the emergency event spatial analysis by utilizing the ranging information and the visual input. The temperature of the object 316 can be determined to be 106 °F and the distance to the object 316 from the sensors on the UAV can be 4 meters.

As illustrated in Figure 3, the object 316 appears to be a human. The controller can determine, based on the image of the object 316, whether the object is a human. For example, the controller can compare the image of the object 316 to predetermined reference images to determine whether the object 316 has the shape of a human. Such reference images may be stored locally at the controller, and/or may be located remotely from the controller (e.g., via a remote computing device/cloud computing environment) and accessible via a wireless network relationship between the mobile device and the remote computing device/cloud computing environment.

In response to the object 316 being determined to be human, the controller can cause the object 316 to be colored differently from other objects in the space. This different coloration can draw attention to a first responder that the object 316 in the space is a human, and that attention should be paid to the object 316 as the human may be trapped in the space as a result of the emergency event. The first responder may determine a plan to locate and rescue the human utilizing the emergency event spatial analysis described above.

Figure 4 is an example of a controller for generating an emergency event spatial analysis, in accordance with one or more embodiments of the present disclosure. As illustrated in Figure 4, the controller 404 can include a memory 432 and a processor 430 for generating an emergency event spatial analysis, in accordance with the present disclosure.

The memory 432 can be any type of storage medium that can be accessed by the processor 430 to perform various examples of the present disclosure. For example, the memory 432 can be a non-transitory computer readable medium having computer readable instructions (e.g., executable instructions/computer program instructions) stored thereon that are executable by the processor 430 for generating an emergency event spatial analysis in accordance with the present disclosure.

The memory 432 can be volatile or nonvolatile memory. The memory 432 can also be removable (e.g., portable) memory, or non-removable (e.g., internal) memory. For example, the memory 432 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 432 is illustrated as being located within controller 404, embodiments of the present disclosure are not so limited. For example, memory 432 can also be located internal to another computing resource (e.g., enabling computer readable instructions to be downloaded over the Internet or another wired or wireless connection).

The processor 430 may be a central processing unit (CPU), a semiconductor-based microprocessor, and/or other hardware devices suitable for retrieval and execution of machine-readable instructions stored in the memory 432.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A controller (104, 404) for generating an emergency event spatial analysis, comprising:
a memory (432); and
a processor (430) configured to execute executable instructions stored in the memory (432) to:
receive a visual input including thermographic data from an infrared, IR, camera (112) and a spatial input including time-of-flight distance and/or dimensional data about a space (108) from a light detection and ranging, LIDAR, sensor (114), wherein the IR camera and the LIDAR sensor are located on an unmanned aerial vehicle, UAV, (110);
generate, based on the visual input and the spatial input, an emergency event spatial analysis including a collection of evaluated and focused information pertaining to the emergency event requiring a response from a first responder by:
generating an image of an object (216, 316) that is radiating thermal energy in the space (108) in which the UAV (110) is located based on the visual input, wherein generating the image includes utilizing the thermographic data; and
determining ranging information of the space (108) in which the UAV (110) is located based on the spatial input, wherein determining the ranging information includes determining a distance from the LIDAR sensor to the object (216, 316); and
display, via a user interface (106, 206, 306), the emergency event spatial analysis including the image of the object (216, 316) and the ranging information of the space (108).

2. The controller (104, 404) of claim 1, wherein the ranging information includes dimensions of the space (108) in which the UAV (110) is located.

3. The controller (104, 404) of claim 1, wherein the ranging information includes distances from the LIDAR sensor to a plurality of objects (116-1, 116-2, 116-N) in the space (108) in which the UAV (110) is located.

4. The controller (104, 404) of claim 1, wherein the processor (430) is configured to execute the instructions to display the emergency event spatial analysis by displaying dimensions of the space (108) in which the UAV (110) is located on the user interface (106, 206, 306).

5. The controller (104, 404) of claim 4, wherein the processor (430) is configured to execute the instructions to display the emergency event spatial analysis by displaying a distance to a point of interest (218) in the space (108) in which the UAV (110) is located on the user interface (106, 206, 306).

6. A method for generating an emergency event spatial analysis, comprising:
receiving, by a controller (104, 404), a visual input including thermographic data from an infrared, IR, camera (112) and a spatial input including time-of-flight distance and/or dimensional data about a space (108) from a light detection and ranging, LIDAR, sensor (114), wherein the IR camera (112) and the LIDAR sensor (114) are located on an unmanned aerial vehicle (UAV) (110);
generating, by the controller (104, 404), an emergency event spatial analysis including a collection of evaluated and focused information pertaining to the emergency event requiring a response from a first responder by:
generating, based on the visual input, an image of an object (216, 316) that is radiating energy in a space (108) in which the UAV (110) is located, wherein generating the image includes utilizing the thermographic data; and
determining, based on the spatial input, ranging information of the space (108) in which the UAV (110) is located, wherein determining the ranging information includes determining a distance from the LIDAR sensor (114) to the object (216, 316); and
displaying, via a user interface (106, 206, 306), the emergency event spatial analysis including the image of the object (216, 316) and the ranging information of the space (108).

7. The method of claim 6, wherein generating the emergency event spatial analysis further includes generating a three-dimensional, 3D, image of the space (108) based on the spatial input from the LIDAR sensor (114).

8. The method of claim 7, wherein:
the ranging information includes dimensions of the space (108); and
the method further includes displaying the dimensions of the space (108) on the 3D image.

9. The method of claim 7, wherein:
the method further includes displaying the distance to the object (216, 316) on the 3D image.

10. The method of claim 7, wherein the method further includes generating an evacuation route from the space (108) on the 3D image.

## Patentansprüche

1. Steuerung (104, 404) zum Erzeugen einer räumlichen Notfallereignisanalyse, umfassend:
einen Speicher (432); und
einen Prozessor (430), der dazu konfiguriert ist, im Speicher (432) gespeicherte ausführbare Anweisungen auszuführen, um:
eine optische Eingabe, die thermographische Daten beinhaltet, von einer Infrarot-, IR-, Kamera (112) und eine räumliche Eingabe, die Laufzeitdistanz- und/oder Abmessungsdaten über einen Raum (108) beinhaltet, von einem Lichtdetektions- und Entfernungsmessungs-, LIDAR-, Sensor (114) zu empfangen, wobei die IR-Kamera und der LIDAR-Sensor sich auf einem unbemannten Luftfahrzeug, UAV (110) befinden;
auf Basis der optischen Eingabe und der räumlichen Eingabe eine räumliche Notfallereignisanalyse zu erzeugen, die eine Erfassung von bewerteten und konzentrierten Informationen beinhaltet, die dem Notfallereignis zugehörig sind, das eine Antwort von einem ersten Responder erfordert, durch:
Erzeugen, auf Basis der optischen Eingabe, eines Bildes eines Objekts (216, 316), das in dem Raum (108), in dem sich das UAV (110) befindet, Wärmeenergie abstrahlt, wobei das Erzeugen des Bildes das Nutzen der thermographischen Daten beinhaltet; und
Bestimmen, auf Basis der räumlichen Eingabe, von Entfernungsmessungsinformationen des Raums (108), in dem sich das UAV (110) befindet, wobei das Bestimmen der Entfernungsmessungsinformationen das Bestimmen einer Distanz von dem LIDAR-Sensor zu dem Objekt (216, 316) beinhaltet; und
über eine Benutzerschnittstelle (106, 206, 306), die räumliche Notfallereignisanalyse anzuzeigen, die das Bild des Objekts (216, 316) und die Entfernungsmessungsinformationen des Raums (108) beinhaltet.

2. Steuerung (104, 404) nach Anspruch 1, wobei die Entfernungsmessungsinformationen Abmessungen des Raums (108), in dem sich das UAV (110) befindet, beinhalten.

3. Steuerung (104, 404) nach Anspruch 1, wobei die Entfernungsmessungsinformationen Distanzen von dem LIDAR-Sensor zu einer Vielzahl von Objekten (116-1, 116-2, 116-N) in dem Raum (108), in dem sich das UAV (110) befindet, beinhalten.

4. Steuerung (104, 404) nach Anspruch 1, wobei der Prozessor (430) dazu konfiguriert ist, die Anweisungen auszuführen, um die räumliche Notfallereignisanalyse durch Anzeigen von Abmessungen des Raums (108), in dem sich das UAV (110) befindet, auf der Benutzerschnittstelle (106, 206, 306) anzuzeigen.

5. Steuerung (104, 404) nach Anspruch 4, wobei der Prozessor (430) dazu konfiguriert ist, die Anweisungen auszuführen, um die räumliche Notfallereignisanalyse durch Anzeigen einer Distanz zu einem Punkt von Interesse (218) in dem Raum (108), in dem sich das UAV (110) befindet, auf der Benutzerschnittstelle (106, 206, 306) anzuzeigen.

6. Verfahren zum Erzeugen einer räumlichen Notfallereignisanalyse, umfassend:
Empfangen, durch eine Steuerung (104, 404), einer optischen Eingabe, die thermographische Daten beinhaltet, von einer Infrarot-, IR-, Kamera (112) und eine räumlichen Eingabe, die Laufzeitdistanz- und/oder Abmessungsdaten über einen Raum (108) beinhaltet, von einem Lichtdetektions- und Entfernungsmessungs-, LIDAR-, Sensor (114), wobei die IR-Kamera (112) und der LIDAR-Sensor (114) sich auf einem unbemannten Luftfahrzeug (UAV) (110) befinden;
Erzeugen, durch die Steuerung (104, 404), einer räumlichen Notfallereignisanalyse, die eine Erfassung von bewerteten und konzentrierten Informationen beinhaltet, die dem Notfallereignis zugehörig sind, das eine Antwort von einem ersten Responder erfordert, durch:
Erzeugen, auf Basis der optischen Eingabe, eines Bildes eines Objekts (216, 316), das in dem Raum (108), in dem sich das UAV (110) befindet, Energie abstrahlt, wobei das Erzeugen des Bildes das Nutzen der thermographischen Daten beinhaltet; und
Bestimmen, auf Basis der räumlichen Eingabe, von Entfernungsmessungsinformationen des Raums (108), in dem sich das UAV (110) befindet, wobei das Bestimmen der Entfernungsmessungsinformationen das Bestimmen einer Distanz von dem LIDAR-Sensor (114) zu dem Objekt (216, 316) beinhaltet; und
Anzeigen, über eine Benutzerschnittstelle (106, 206, 306), der räumlichen Notfallereignisanalyse, die das Bild des Objekts (216, 316) und die Entfernungsmessungsinformationen des Raums (108) beinhaltet.

7. Verfahren nach Anspruch 6, wobei das Erzeugen der räumlichen Notfallereignisanalyse ferner das Erzeugen eines dreidimensionalen, 3D-, Bildes des Raums (108) auf Basis der optischen Eingabe von dem LIDAR-Sensor (114) beinhaltet.

8. Verfahren nach Anspruch 7, wobei:
die Entfernungsmessungsinformationen Abmessungen des Raums (108) beinhalten; und
das Verfahren ferner das Anzeigen der Abmessungen des Raums (108) auf dem 3D-Bild beinhaltet.

9. Verfahren nach Anspruch 7, wobei:
das Verfahren ferner das Anzeigen der Distanz zu dem Objekt (216, 316) auf dem 3D-Bild beinhaltet.

10. Verfahren nach Anspruch 7, wobei das Verfahren ferner das Erzeugen einer Evakuierungsroute aus dem Raum (108) auf dem 3D-Bild beinhaltet.

## Revendications

1. Contrôleur (104, 404) destiné à générer une analyse spatiale d'événement d'urgence, comprenant :
une mémoire (432) ; et
un processeur (430) configuré pour exécuter des instructions exécutables stockées dans la mémoire (432) pour :
recevoir une entrée visuelle incluant des données thermographiques provenant d'une caméra infrarouge, IR (112) et une entrée spatiale incluant des données de distance par temps de vol et/ou des données dimensionnelles concernant un espace (108) provenant d'un capteur de détection et de télémétrie par lumière, LIDAR (114), dans lequel la caméra IR et le capteur LIDAR sont situés sur un véhicule aérien sans pilote, UAV (110) ;
générer, sur la base de l'entrée visuelle et de l'entrée spatiale, une analyse spatiale d'événement d'urgence incluant un ensemble d'informations évaluées et ciblées relatives à l'événement d'urgence nécessitant une intervention d'un premier intervenant par :
la génération d'une image d'un objet (216, 316) qui rayonne une énergie thermique dans l'espace (108) au sein duquel l'UAV (110) est situé sur la base de l'entrée visuelle, dans laquelle la génération de l'image inclut l'utilisation des données thermographiques ; et
la détermination des informations de télémétrie de l'espace (108) au sein duquel l'UAV (110) est situé sur la base de l'entrée spatiale, dans laquelle la détermination des informations de télémétrie inclut la détermination d'une distance entre le capteur LIDAR et l'objet (216, 316) ; et
afficher, via une interface utilisateur (106, 206, 306), l'analyse spatiale d'événement d'urgence incluant l'image de l'objet (216, 316) et les informations de télémétrie de l'espace (108).

2. Contrôleur (104, 404) selon la revendication 1, dans lequel les informations de télémétrie incluent des dimensions de l'espace (108) au sein duquel l'UAV (110) est situé.

3. Contrôleur (104, 404) selon la revendication 1, dans lequel les informations de télémétrie incluent des distances entre le capteur LIDAR et une pluralité d'objets (116-1, 116-2, 116-N) dans l'espace (108) au sein duquel l'UAV (110) est situé.

4. Contrôleur (104, 404) selon la revendication 1, dans lequel le processeur (430) est configuré pour exécuter les instructions afin d'afficher l'analyse spatiale d'événement d'urgence en affichant des dimensions de l'espace (108) au sein duquel l'UAV (110) est situé sur l'interface utilisateur (106, 206, 306).

5. Contrôleur (104, 404) selon la revendication 4, dans lequel le processeur (430) est configuré pour exécuter les instructions afin d'afficher l'analyse spatiale d'événement d'urgence en affichant une distance jusqu'à un point d'intérêt (218) dans l'espace (108) au sein duquel l'UAV (110) est situé sur l'interface utilisateur (106, 206, 306).

6. Procédé destiné à générer une analyse spatiale d'événement d'urgence, comprenant :
la réception, par un contrôleur (104, 404), d'une entrée visuelle incluant des données thermographiques provenant d'une caméra infrarouge, IR (112) et une entrée spatiale incluant des données de distance par temps de vol et/ou des données dimensionnelles concernant un espace (108) provenant d'un capteur de détection et de télémétrie par lumière, LIDAR (114), dans lequel la caméra IR (112) et le capteur LIDAR (114) sont situés sur un véhicule aérien sans pilote (UAV) (110) ;
la génération, par le contrôleur (104, 404), d'une analyse spatiale d'événement d'urgence incluant un ensemble d'informations évaluées et ciblées relatives à l'événement d'urgence nécessitant une intervention d'un premier intervenant par :
la génération, sur la base de l'entrée visuelle, d'une image d'un objet (216, 316) qui rayonne de l'énergie dans un espace (108) au sein duquel l'UAV (110) est situé, dans laquelle la génération de l'image inclut l'utilisation des données thermographiques ; et
la détermination, sur la base de l'entrée spatiale, des informations de télémétrie de l'espace (108) au sein duquel l'UAV (110) est situé, dans lequel la détermination des informations de télémétrie inclut la détermination d'une distance entre le capteur LIDAR (114) et l'objet (216, 316) ; et
l'affichage, via une interface utilisateur (106, 206, 306), de l'analyse spatiale d'événement d'urgence incluant l'image de l'objet (216, 316) et les informations de télémétrie de l'espace (108).

7. Procédé selon la revendication 6, dans lequel la génération de l'analyse spatiale d'événement d'urgence inclut en outre la génération d'une image tridimensionnelle, 3D, de l'espace (108) sur la base de l'entrée spatiale provenant du capteur LIDAR (114).

8. Procédé selon la revendication 7, dans lequel :
les informations de télémétrie incluent des dimensions de l'espace (108) ; et
le procédé inclut en outre l'affichage des dimensions de l'espace (108) sur l'image 3D.

9. Procédé selon la revendication 7, dans lequel :
le procédé inclut en outre l'affichage de la distance jusqu'à l'objet (216, 316) sur l'image 3D.

10. Procédé selon la revendication 7, dans lequel le procédé inclut en outre la génération d'un itinéraire d'évacuation à partir de l'espace (108) sur l'image 3D.
